# EUROPEAN PATENT APPLICATION

(11) **EP 4 808 277 A1**
(43) Date of publication of application: **16.09.2026**
(21) Application number: 24888750.7
(22) Date of filing: 06.11.2024
(51) Int. Cl.: H05B 3/20, B32B 5/18

(54) **PLANAR HEATING ELEMENT, LAMINATE, AND VEHICLE INTERIOR MATERIAL**

(30) Priority: 07.11.2023 JP 2023190397
(71) Applicant: Sekisui Chemical Co., Ltd., Osaka-shi, Osaka 530-8565 (JP)
(72) Inventor: MURAKAMI, Junnosuke, Mishima-gun, Osaka 618-0021 (JP); SAWADAISHI, Tetsurou, Mishima-gun, Osaka 618-0021 (JP); MASUDA, Takuya, Toyohashi-shi, Aichi 441-8123 (JP); NAKANISHI, Takayuki, Mishima-gun, Osaka 618-0021 (JP); YAMAZAKI, Kouta, Mishima-gun, Osaka 618-0021 (JP)
(74) Representative: Ter Meer Steinmeister & Partner
(86) International application number: PCT/JP2024/039505
(87) International publication number: WO 2025/100457

(57) **Abstract**

A planar heating element 10 has: a material substrate 15 containing a foam 11; and a heating layer 20 disposed on one surface 15A of the material substrate 15.

## Description

### Technical Field

The present invention relates to a planar heating element used as a heating device, and a laminate and a vehicle interior material that have a planar heating element.

### Background Art

A vehicle interior material for automobiles, etc., in some cases, is equipped with a heater in order to enhance comfort of occupants under a cold environment. The heater attached to the interior material is commonly constituted with a heating wire composed of a metal material such as nichrome and a copper alloy. The nichrome wire is attached to members that constitute interior materials such as, for example, a resin sheet, woven fabric, and nonwoven fabric. Since the nichrome wire typically has a thickness of about several hundreds of micrometers to several millimeters, the nichrome wire attached to the interior material may impair comfort of occupants due to sense of touch with unevenness. In addition, since having poor flexibility compared with other members used for the interior materials, such as a skin and nonwoven fabric, the nichrome wire cannot conform with stress due to sitting by occupants, etc., which may impart comfort of the occupants.

Thus, conventionally, as disclosed in PTL1, for example, efforts have been made to prevent the unevenness of the nichrome wire from appearing on the surface by providing grooves, etc. on the members constituting the interior materials and disposing the interior materials therein.

### Citation List

### Patent Literature

PTL1: JP 2019-111656 A

### Summary of Invention

### Technical Problem

However, providing the grooves, etc. on the members constituting the interior materials as in PTL1 unfortunately increases processing steps for the interior materials and thus decreases production efficiency. In addition, since heat generated by the nichrome wire spreads in all directions, the outer surface of the interior material fails to be efficiently heated. Further, merely embedding the nichrome wire in the grooves fails to realize soft feelings since nichrome wire lacks flexibility, which leaves the problems unsolved.

Accordingly, an object of the present invention is to provide a planar heating element which can efficiently heat the sheet surface in a simple configuration while avoiding the sense of touch with unevenness without decreasing production efficiency.

### Solution to Problem

The present inventors have made intensive investigation, and consequently found that the above problem can be solved by disposing a heating layer on one surface of a material substrate containing a foam. This finding has led to completion of the following present invention.

Specifically, the present invention provides the following [1] to [17].
[1] A planar heating element, comprising:
   a material substrate comprising a foam; and
   a heating layer disposed on one surface of the material substrate.
[2] The planar heating element according to the [1], wherein the heating layer is disposed so as to directly contact the foam.
[3] The planar heating element according to the [1] or [2], wherein a ground layer is formed on the surface of the material substrate contacting the heating layer.
[4] The planar heating element according to any one of the [1] to [3], wherein the heating layer is formed by printing.
[5] The planar heating element according to any one of the [1] to [4], wherein at least a part of the heating layer is embedded below a surface of the foam.
[6] The planar heating element according to any one of the [1] to [5], wherein a skin layer is formed on at least one surface of the foam, and the heating layer is formed on the skin layer.
[7] The planar heating element according to any one of the [1] to [6], wherein the foam is an olefin-resin-type foam.
[8] The planar heating element according to the [7], wherein a resin to constitute the foam comprises a polypropylene resin.
[9] The planar heating element according to any one of the [1] to [8], wherein the foam is an electron-beam crosslinked product.
[10] The planar heating element according to any one of the [1] to [9], wherein the foam is a closed cell foam.
[11] The planar heating element according to any one of the [1] to [10], wherein the surface of the material substrate on a side on which the heating layer is to be provided has a surface roughness Ra of 5 µm or less.
[12] The planar heating element according to any one of the [1] to [11], wherein the heating layer has a thickness of 100 µm or less, and is formed from an electrically conductive material.
[13] A laminate, comprising:
   the planar heating element according to any one of the [1] to [12]; and
   a cover adhered to the planar heating element directly or via another layer.
[14] The laminate according to the [13], wherein the cover is adhered to a surface of the planar heating element on a side on which the heating layer is provided.
[15] The laminate according to the [13] or [14], wherein at least a part of the heating layer is embedded below a surface of the foam.
[16] A vehicle interior material, comprising the planar heating element according to any one of the [1] to [12] or the laminate according to any one of the [13] to [15].
[17] The vehicle interior material according to the [16], wherein the heating layer is disposed on an interior side, and the material substrate is disposed on a side opposite to the interior side.

### Advantageous Effects of Invention

The planar heating element of the present invention does not decrease the production efficiency, has a simple configuration, avoids the sense of touch with unevenness, and can efficiently heat the surface.

### Brief Description of Drawings

[Fig. 1] Fig. 1 is a schematic sectional view of a planar heating element according to one embodiment of the present invention.
[Fig. 2] Fig. 2 is a schematic sectional view of a planar heating element according to another embodiment of the present invention.
[Fig. 3] Fig. 3 is a plan view of a planar heating element according to one embodiment of the present invention.
[Fig. 4] Fig. 4 is a schematic sectional view of a laminate according to one embodiment of the present invention.

### Description of Embodiments

### <Planar heating element>

Hereinafter, the planar heating element of the present invention will be described with reference to embodiments.

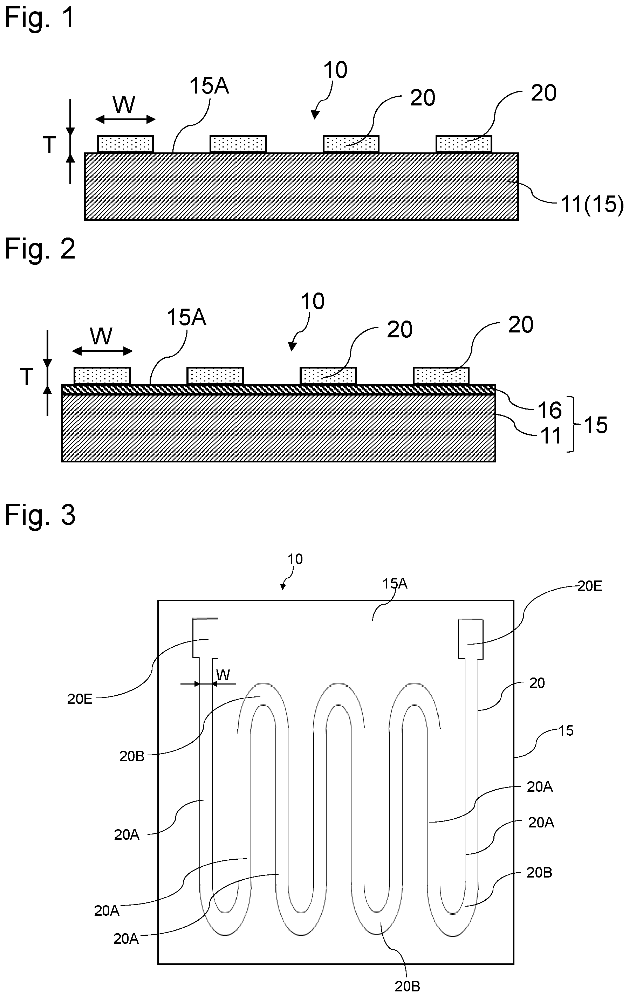

Fig. 1 illustrates a planar heating element according to one embodiment of the present invention. As illustrated in Fig. 1, a planar heating element 10 according to one embodiment has a material substrate 15 composed of a foam 11 and a heating layer 20 disposed on one surface 15A of the material substrate 15.

The planar heating element 10 having the above configuration allows at least a part of the heating layer 20 to have a state of embedding inside a foam 11 by pressing from a surface side of the planar heating element 10 on which the heating layer 20 is provided when the planar heating element 10 is used or incorporated in a vehicle interior material, etc. Thus, it can be prevented that the surface of the side on which the heating layer 20 is to be provided has the sense of touch with unevenness.

In addition, since the material substrate 15 having the foam 11 plays a role of a thermally insulative layer, it can be prevented that heat generated on the heating layer 20 spreads from the surface of the material substrate 15 side of the planar heating element 10. Thus, the surface of the planar heating element 10 on the side on which the heating layer 20 is to be provided can be efficiently heated. Further, the planar heating element 10 can be manufactured with high production efficiency because special processing such as providing of grooves on the material substrate 15 is not needed. In addition, using the foam 11 as the material substrate 15 can reduce a weight of the planar heating element 10.

Hereinafter, each member to constitute the planar heating element will be described in more detail.

### [Material substrate and foam]

The foam 11 is a resin foam. Examples of the resin to constitute the foam include a polyolefin-type resin, a urethane-type resin, an acrylic resin, and an elastomeric resin. The resin used for the foam 11 may be used singly, or may be used in combination of two or more thereof. Among these, the foam 11 is preferably a polyolefin-type resin foam, which uses the polyolefin-type resin as the resin. Using the polyolefin-type resin for the foam provides good flexibility and mechanical strength.

### (Polyolefin-type resin)

Examples of the polyolefin-type resin include a polyethylene resin, a polypropylene resin, and an ethylene-vinyl acetate copolymer. Among these, the polypropylene resin is preferable. Using the polypropylene resin easily imparts heat resistance to the material substrate 15, and the polypropylene resin is suitably used as the planar heating element.

Examples of the polyethylene resin include low density polyethylene (density: less than 0.930 g/cm³), medium density polyethylene (density: 0.930 g/cm³ or more and less than 0.942 g/cm³), high density polyethylene (density: 0.942 g/cm³ or more), and linear low density polyethylene. A density of the linear low density polyethylene is preferably 0.870 to 0.910 g/cm³, more preferably 0.875 to 0.907 g/cm³, and further preferably 0.880 to 0.905 g/cm³. As the polyethylene resin, a plurality of polyethylene resins may be used, and a polyethylene resin having a density out of the above range may be used.

Examples of the ethylene-vinyl acetate copolymer used as the polyolefin-type resin include an ethylene-vinyl acetate copolymer containing 50 mass% or more of ethylene.

The polypropylene resin is not particularly limited, and examples thereof include a polypropylene homopolymer (homo-polypropylene) and a copolymer between propylene and another olefin. The copolymer between propylene and another olefin may be any one of a block copolymer, a random copolymer, and a random block copolymer, but a random copolymer (random polypropylene) is preferable. Examples of the copolymer between propylene and another olefin include a propylene-α-olefin containing propylene at preferably 75 mass% or more, and more preferably 90 mass% or more.

Examples of the other olefin to be copolymerized with propylene include α-olefins such as ethylene, 1-butene, 1-pentene, 4-methyl-1-pentene, 1-hexene, 1-octene, 1-nonene, and 1-decene, and ethylene is preferable among these. Therefore, the random polypropylene is more preferably an ethylene-propylene random copolymer.

When the polypropylene resin is used as the polyolefin-type resin, the polypropylene resin may be used singly, and the polypropylene resin may be used in combination with a polyolefin-type resin other than the polypropylene resin or a resin other than the polyolefin-type resin. For example, the polypropylene resin may be used in combination with a polyolefin-type resin other than the polypropylene resin, and may be used in combination with a resin other than the polyolefin-type resin. Examples of the resin other than the polyolefin-type resin include an elastomeric resin.

Examples of the elastomeric resin include rubber components such as ethylene-propylene-diene rubber (EPDM), ethylene-propylene rubber (EPM), polybutadiene rubber, polyisoprene rubber, and styrene rubbers such as styrene-butadiene copolymer (SBR) or a hydrogenated derivative thereof (HSBR). Examples thereof also include thermoplastic elastomers such as an olefin-type thermoplastic elastomer and a styrene-type thermoplastic elastomer.

A higher content of the polypropylene resin in the foam is better from the viewpoint of heat resistance, and the content is, for example, preferably 50 to 100 mass%, more preferably 70 to 100 mass%, and further preferably 80 to 100 mass% based on an entire amount of the resin contained in the foam.

The resin to constitute the foam is also preferably a polypropylene-type elastomer containing a polypropylene resin and a rubber component from the viewpoint of ability to impart both heat resistance and flexibility. The polypropylene-type elastomer may be those in which the polypropylene resin and the rubber component are separated or may be those in which these components are copolymerized. The polypropylene-type elastomer is classified into a reactor-type simple blend type, a dynamic crosslinking type, etc. according to a manufacturing method therefor, and the reactor type is preferable in terms of a small domain diameter of the dispersed rubber component and high transparency. As such a reactor-type polypropylene-type elastomer, commercially available products such as "Catalloy" (manufactured by SunAllomer Ltd.) may be used.

### (Foaming agent)

The foam 11 is preferably a foam obtained by foaming an expandable composition containing the above resin and a foaming agent. Examples of the foaming agent include a thermally decomposable foaming agent, and as the thermally decomposable foaming agent, an organic foaming agent and an inorganic foaming agent are usable. The used thermally decomposable foaming agent typically has a decomposing temperature that is higher than a melting point of the resin, and those having a decomposing temperature of 140 to 270°C is used, for example.

Specific examples of the organic foaming agent include: azo compounds such as azodicarbonamide, an azodicarboxylate metal salt (such as barium azodicarboxylate), and azobisisobutyronitrile; nitroso compounds such as N,N**'**-dinitrosopentamethylenetetramine; hydrazine derivatives such as hydrazodicarbonamide, 4,4**'**-oxybis(benzenesulfonyl hydrazide), and toluenesulfonyl hydrazide; and semicarbazide compounds such as toluenesulfonyl semicarbazide.

Examples of the inorganic foaming agent include ammonium carbonate, sodium carbonate, ammonium hydrogen carbonate, sodium hydrogen carbonate, ammonium nitrite, sodium borohydride, and monosodium citric anhydride.

Among these, the azo compound is preferable, and azodicarbonamide is particularly preferable from the viewpoint of obtaining fine cells and from economic and safety viewpoints. These thermally decomposable foaming agents may be used singly, or in combination of two or more thereof.

A blending amount of the thermally decomposable foaming agent in the expandable composition is adjusted according to an expansion ratio of the foam. The blending amount is preferably 0.5 to 20 parts by mass, more preferably 1 to 15 parts by mass, and further preferably 2 to 10 parts by mass relative to 100 parts by mass of the resin.

Note that a foaming agent other than the thermally decomposable foaming agent may also be used as the foaming agent, and a physical foaming agent may be used, for example. As the physical foaming agent, high-pressure inert gas is preferably used. The inert gas is not particularly limited as long as it is inert to the resin composition, and it is immersible. Examples thereof include carbon dioxide, butane gas, nitrogen gas, and air. These gasses may be mixed for use. Among these, carbon dioxide and butane gas are preferable from the viewpoint of easily increasing the expansion ratio of the foam. The inert gas for immersion is preferably in a supercritical state or a subcritical state.

### (Other additives)

Into the foam or the expandable composition, additives commonly used for the foam, such as a crosslinker, a crosslinking aid, an antioxidant, a thermal stabilizer, a colorant, a flame retardant, an antistatic agent, a filler, and a decomposing-temperature regulator, may be blended as necessary. Among these, the antioxidant and the decomposing-temperature regulator are preferably used.

### (Expansion ratio)

The foam 11 has an expansion ratio of preferably 4 to 50 cm³/g, more preferably 8 to 30 cm³/g, and further preferably 10 to 20 cm³/g. When the expansion ratio of the foam 11 is equal to or more than the above lower limit value, the foam 11 is compressively deformed largely with a relatively low load, thereby easily setting the heating layer 20 to have the state of embedding inside the material substrate 15 to more effectively prevent unevenness of the heating layer 20 from appearing on the surface when used or assembled. When the expansion ratio is equal to or lower than the above upper limit value, mechanical strength is imparted to the foam 11 to some extent to easily enhance durability, etc. Note that the expansion ratio is an inverse of an apparent density, and the apparent density can be measured in accordance with JIS K7222, for example.

### (Closed cell ratio)

The foam 11 may be an open cell foam or a semi-closed cell foam, or may be a closed cell foam, and is preferably the closed cell foam. The foam 11 being the closed cell foam has enhanced thermal insulation to more enhance heating efficiency on the surface of the planar heating element 10 on the side on which the heating layer 20 is provided. Even when the heating layer 20 is formed directly on the surface of the foam 11 or a ground layer 16 (see Fig. 2) is formed as described later, an ink for forming the heating layer 20 or the ground layer 16 hardly penetrates the inside, which enhances film formability of the ground layer 16 and the heating layer 20.

The closed cell foam is those in which most cells contained in the foam are closed cells. Specifically, a closed cell ratio is preferably 70% or more, more preferably 80% or more, and further preferably 90% or more. An upper limit of the closed cell ratio is not particularly limited, and is 100%. The closed cell ratio being equal to or higher than the above lower limit value enhances thermal insulation, and more easily prevents penetration of the ink inside the foam. In addition, the high closed cell ratio increases mechanical strength of the foam 11, thereby easily enhancing durability, etc. of the material substrate 15.

The closed cell ratio can be measured in accordance with a method of ASTM D2856 (1998). Specifically, the closed cell ratio is measured by the following procedure.

First, a planar square specimen with 5 cm on one side is cut from the foam. Then, a thickness of the specimen is measured to calculate an apparent volume V₁ of the specimen, and a weight W₁ of the specimen is measured.

Next, a volume V₂ of cells is calculated based on the following formula. A density of the matrix resin constituting the specimen is set as ρ (g/cm³). $Volume {V}_{2} of cells = {V}_{1} - {W}_{1} / ρ$

Subsequently, the specimen is sunk in distilled water at 23°C at a depth of 100 mm from the water surface, and a pressure of 15 kPa is applied to the specimen over three minutes. Thereafter, the pressure is released in water, the specimen is left to stand for one minute, then taken out of water, a water content adhering to the surface of the specimen is removed to measure a weight W₂ of the specimen, and an open cell ratio F₁ and a closed cell ratio F₂ are calculated based on the following formulae. $Open cell ratio {F}_{1} \left(%\right) = 100 \times \left({W}_{2}-{W}_{1}\right) / {V}_{2}$ $Closed cell ratio {F}_{2} \left(%\right) = 100 - {F}_{1}$

### (Degree of crosslinking)

The foam 11 is preferably a crosslinked foam, and more preferably an electron-beam crosslinked product crosslinked by electron beam. The foam 11 being the crosslinked foam, specifically the electron-beam crosslinked product, enhances durability, formability, etc. A degree of crosslinking of the foam 11 is not particularly limited, and 10 to 70 mass%, and more preferably 20 to 60 mass%, for example. Setting the degree of crosslinking of the foam 11 to be within the above range easily enhances mechanical strength, flexibility, etc. of the material substrate 15. In addition, foaming for the foam 11 can be appropriately performed. A method for measuring the degree of crosslinking is as follows.

A specimen with about 100 mg is collected from the foam, and a weight A (mg) of the specimen is accurately measured. Next, this specimen is immersed in 30 cm³ of xylene at 120°C to be left to stand for 24 hours, and then the mixture is filtered with a 200-mesh metal mesh to collect an insoluble content on the metal mesh, the insoluble content is dried in vacuo, and a weight B (mg) of the insoluble content is accurately measured. From the obtained values, the degree of crosslinking (mass%) is calculated with the following formula. $Degree of crosslinking \left(mass%\right) = 100 \times \left(B/A\right)$

### (Thickness)

A thickness of the foam 11 is not particularly limited, but preferably 0.5 to 100 mm, and more preferably 1 to 50 mm. When the thickness is within these ranges, the planar heating element 10 can be suitably used as the vehicle interior material. Setting the thickness to be equal to or more than the above lower limit value allows the heating layer 20 to be easily embedded inside the material substrate 15, and enhances thermal insulation of the material substrate 15.

### (Surface roughness)

The material substrate 15 preferably has a surface roughness Ra on the surface 15A on the side on which the heating layer 20 is provided of 5 µm or less. Although the material substrate 15 constituted with the foam 11 may form unevenness on the surface due to the cells, setting the surface roughness Ra to be 5 µm or less hardly exposes the unevenness due to the cells to the surface of the material substrate 15. Thus, it is easily prevented that the unevenness caused by the cells deteriorate adhesiveness of the heating layer 20 to the material substrate 15. The surface roughness Ra of the surface 15A is more preferably 3 µm or less. A lower surface roughness Ra of the surface 15A is better, but is practically 1 µm or more, for example.

The surface 15A of the material substrate 15 may be composed of the surface of the foam 11, but may be formed from a member other than the foam 11. Specifically, the surface 15A may be formed from a surface non- foaming layer (not illustrated) to be a skin layer described later, the ground layer 16 (see Fig. 2), etc.

The surface roughness Ra can be set to be equal to or lower than a certain value as above by, for example, regulating a surface state of the foam 11. For example, the foam 11 may be sliced, and in this case, a surface (non-slice face) of the foam 11, other than a surface (slice face) formed by the slicing, is the surface 15A on which the heating layer 20 is to be provided. In addition, the surface roughness Ra can be reduced by appropriately regulating the degree of crosslinking of the foam 11, the expansion ratio of the foam sheet, etc. Further, the surface roughness Ra can be reduced also by forming the skin layer or the ground layer 16, as described later.

The surface roughness Ra is a value of an arithmetically averaged roughness determined in accordance with JIS B0601 (2001).

The material substrate 15 may consist of the foam only, but may be provided with a layer other than the foam on a surface of the material substrate 15. For example, a layer other than the foam 11 may be provided on the surface 15A of the material substrate 15 on which the heating layer 20 is to be provided. Specifically, a non- foaming layer (not illustrated) to be the skin layer described later, etc. may be provided, and the ground layer 16 such as a deterioration-resistant film and an adhesive coating film may be provided as illustrated in Fig. 2.

### (Skin layer)

The foam 11 may have the skin layer (not illustrated) formed on at least one surface thereof, and the heating layer 20 may be formed on the skin layer. The skin layer is a layer with a reduced impact of unevenness due to the cells compared with the inside of the foam 11. Specifically, the skin layer is formed of a non-slice face, described later, and may be a layer composed of a thin film on the surface of the foam 11. In addition, the skin layer may be a non- foaming layer (also referred to as "surface non- foaming layer") or a foaming layer (also referred to as "surface foaming layer") having a lower expansion ratio than the foam (a core foaming layer) provided inside the skin layer.

The surface non- foaming layer or the surface foaming layer are favorably constituted with a resin layer, and for a resin used for the resin layer, the aforementioned resins exemplified as the resin constituting the foam are appropriately selected for use. The detail thereof is as described for the foam. The presence of the skin layer can inhibit penetration or bleeding of the ink used for printing during formation of the heating layer and the ground layer, described later.

When the skin layer is the surface foaming layer, the foam 11 favorably has the core foaming layer composed of the foam and the surface foaming layer disposed on the surface thereof. The surface foaming layer is favorably provided on at least the surface 15A of the material substrate 15 on which the heating layer 20 is to be provided, but the surface foaming layer may be provided on both surfaces of the core foaming layer. That is, when the skin layer is the surface foaming layer, the foam 11 provided on the material substrate may have a layered structure of the surface foaming layer / the core foaming layer / the surface foaming layer, or may have a layered structure of the surface foaming layer / the core foaming layer. Further, the foam 11 may have a layered structure of the surface foaming layer / the core foaming layer / the surface non-foaming layer.

As for the core foaming layer, configurations other than the thickness are as described for the foam described in detail. As for the surface foaming layer, configurations other than the thickness and the expansion ratio are as described for the foam. The expansion ratio of the surface foaming layer is favorably lower than the expansion ratio of the core foaming layer. Specifically, the expansion ratio of the surface foaming layer is preferably 1 to 5 cm³/g, preferably 1.1 to 3 cm³/g, and further preferably 1.2 to 2 cm³/g. A total thickness of the core foaming layer and the surface foaming layer is favorably as the thickness of the above foam, but the thickness of the core foaming layer is preferably larger than the thickness of each surface foaming layer from the viewpoint of achieving flexibility of the foam.

When the skin layer is the surface non-foaming layer, the skin layer is favorably composed of the non-foaming resin layer having substantially no cells, as described above. When the skin layer is the surface non-foaming layer, the material substrate 15 favorably has the core foaming layer composed of the foam 11 and the surface non-foaming layer disposed on the surface thereof. The surface non-foaming layer is favorably provided on at least the surface 15A of the material substrate 15 on which the heating layer 20 is to be provided, but the surface non-foaming layer may be provided on both surfaces of the core foaming layer. That is, when the skin layer is the surface non-foaming layer, the foam 11 provided on the material substrate may have a layered structure of the surface non-foaming layer / the core foaming layer / the surface non-foaming layer, or may have a layered structure of the surface non-foaming layer / the core foaming layer. Further, the foam 11 may have a layered structure of the surface non-foaming layer / the core foaming layer / the surface foaming layer.

As described above, the thickness of the skin layer (the surface non-foaming layer or the surface foaming layer) on the surface 15A on which the heating layer 20 is to be disposed is not particularly limited, but preferably about 5 to 500 µm, more preferably 8 to 300 µm, and further preferably 10 to 100 µm, for example. Setting the thickness of the surface non-foaming layer or the surface foaming layer to be equal to or more than the certain value allows the effect given by providing the skin layer composed of the non-foaming layer or the surface foaming layer to be easily exerted. In addition, setting the thickness of the surface non-foaming layer or the surface foaming layer to be equal to or lower than the certain value does not impair flexibility of the material substrate 15 and easily embeds the heating layer 20 inside the foam 11.

### (Ground layer)

As for the material substrate 15, the ground layer 16 may be provided on the surface 15A of the material substrate contacting the heating layer 20, as illustrated in Fig. 2. Examples of the ground layer 16 include a deterioration-resistant film or an adhesive coating film. The ground layer 16 may have functions of both of these films. The deterioration-resistant film is a film to prevent deterioration of the heating layer 20. Since the material substrate 15 in the present invention is constituted with the foam 11, an adhesion surface of the heating layer 20 to the material substrate 15 easily deteriorates due to flow of air from the material substrate 15 side. However, providing the deterioration-resistant film easily inhibits such deterioration. Specifically, the material substrate 15 provided with the deterioration-resistant film can enhance at least any one of oxidation resistance, sulfidation resistance, and humidity resistance of the heating layer 20, preferably all of them.

When the ground layer 16 is the adhesive coating film, the ground layer 16 can enhance adhesiveness between the heating layer 20 and the foam 11. The heating layer 20 may have insufficient adhesiveness when adhered directly to the foam 11, but the adhesion failure of the heating layer 20 to the material substrate 15 can be inhibited by providing the adhesive coating film.

The ground layer 16 is preferably formed directly on the surface of the foam 11, but as the surface non-foaming layer to constitute the skin layer, the ground layer 16 may be formed on the surface of the layer other than the foam formed on the surface of the foam 11. When the ground layer 16 is provided, the heating layer 20 described later is preferably formed directly on the ground layer 16.

Although the ground layer 16 may be provided on the entire of the surface 15A of the material substrate 15 as illustrated in Fig. 2, the ground layer 16 may not be provided on the entire surface thereof, and is favorably provided on at least a region where the heating layer 20 described later is to be formed.

The ground layer 16 is not particularly limited, and formed from a resin composition containing a resin such as a thermosetting resin and a thermoplastic resin. Specific examples of the resin used for the ground layer 16 include a urethane resin, an acryl resin, a cycloolefin polymer, and a cycloolefin copolymer. These resins may be used singly, or may be a mixture, or a copolymer, etc. of two or more selected resins. The ground layer 16 using the urethane resin or the acryl resin can be suitably used as the aforementioned deterioration-resistant film to enhance deterioration resistance or the adhesive coating film to enhance adhesiveness between the heating layer 20 and the foam 11. The resin composition for forming the ground layer may contain an additive and a colorant in addition to the resin component, and may contain a solvent to dilute the resin composition with the solvent.

The ground layer 16 is preferably formed from a printing ink, and the printing ink may be a medium, which is a colorless ink. When being formed from the printing ink, the ground layer 16 is favorably formed by coating the surface of the foam 11 or the surface of the layer other than the foam, such as the skin layer, by a known printing method such as screen printing and inkjet printing. By forming the ground layer 16 with the printing ink, both the ground layer 16 and the heating layer 20 can be formed with known printing methods, thereby enabling efficient manufacturing of the planar heating element 10 even when the ground layer 16 is provided. The printing ink to form the ground layer 16 is not particularly limited, and examples thereof include a thermosetting ink, a photocurable ink, and a two-liquid curable ink composed of an acryl resin, a urethane resin, a cycloolefin polymer, a cycloolefin copolymer, etc.

A thickness of the ground layer 16 is not particularly limited, but preferably about 0.1 to 50 µm, and more preferably 0.5 to 20 µm, for example.

The aforementioned deterioration-resistant film is not limited to the configuration of providing as the ground layer 16 on the surface 15A of the aforementioned material substrate 15, and may be formed on a surface of the heating layer 20 described later, which is the opposite side to the surface of the material substrate 15 side. When the deterioration-resistant film is formed on the surface of the heating layer 20, which is the opposite side to the surface of the material substrate 15 side, the ground layer 16 as the deterioration-resistant film provided on the surface of the foam may be omitted, but the ground layer 16 as the deterioration-resistant film is preferably formed. The above configuration allows the heating layer 20 to have the formed deterioration-resistant films on both the surface on the material substrate 15 side and the surface on the opposite side, and thus, deterioration of the heating layer 20 can be more effectively inhibited.

### (Method for manufacturing foam)

The foam 11 can be manufactured by, but not particularly limited to, foaming the expandable composition containing the resin component and the foaming agent with the foaming agent. In this time, foaming with the foaming agent is favorably performed by heating, etc. The foam 11 is preferably obtained by crosslinking the expandable composition, and foaming the crosslinked expandable composition. The expandable composition may contain an additive in addition to the resin component and the foaming agent as necessary.

Specifically, it is industrially advantageous that the foam 11 is manufactured by a method including the following processes (1) to (3).
Process (1): a process of supplying raw materials for the expandable composition into a kneading apparatus and kneading the mixture, and then obtaining a sheet-shaped expandable composition (an expandable sheet);
Process (2): a process of irradiating the expandable composition obtained in the process (1) with ionized radiation to be crosslinked; and
Process (3): a process of heating the expandable composition crosslinked in the process (2) to a temperature equal to or higher than a decomposing temperature of the foaming agent for foaming to obtain a sheet-shaped foam.

In the process (1), the sheet-shaped expandable composition can be manufactured by kneading the raw materials to constitute the expandable composition by using a kneader such as a Banbury mixer and a pressure kneader, and then continuously extruding the mixture with an extruder, a calendar, conveyer-belt casting, etc.

Examples of the ionized radiation used in the process (2) include α-ray, β-ray, γ-ray, and electron beam, and electron beam is preferable. An irradiation dose of the ionized radiation may be any as long as it can yield the desired degree of crosslinking, but preferably 0.1 to 10 Mrad, more preferably 0.2 to 5 Mrad, and further preferably 0.5 to 3 Mrad.

In the process (3), the temperature of heating and foaming the expandable composition is typically 140 to 300°C, and preferably 150 to 280°C, for example, depending on the decomposing temperature of the thermally decomposable foaming agent used as the foaming agent.

In the process (3), the foam may be stretched in any one of MD or TD or in both the directions after foaming or during foaming. In addition, the process (3) may be performed after the process (1) not via the process (2). That is, the sheet-shaped expandable composition may be foamed without crosslinking.

When the foam obtained by the above manufacturing method has a large thickness, the foam may be appropriately sliced. Slicing is favorably preformed along a direction perpendicular to the thickness direction of the sheet-shaped foam. Therefore, the foam 11 may have slice faces formed by slicing on both the surfaces, or may have a slice face on one surface and non-slice face on the other surface.

Of course, the foam 11 may not be sliced to have non-slice faces on both the surfaces, but at least one surface is preferably a non-slice face. The non-slice face is the foam surface itself formed by foaming the aforementioned expandable composition, and a thin film formed by walls of cells is formed. Thus, the non-slice face prevents exposure of the cells to form holes, and easily reduces the surface roughness Ra. Note that the thin film herein may be referred to as the skin layer as described above.

As for the foam, when the surface non-foaming layer or the surface foaming layer is provided as the skin layer as described above, the resin layer or the expandable composition for forming the surface non- foaming layer or the surface foaming layer is favorably laminated to the sheet-shaped expandable composition for forming the core foaming layer by coextrusion, etc. Specifically, in the process (1), the resin layer for forming the surface non-foaming layer or the sheet-shaped expandable composition for forming the surface foaming layer is favorably laminated to the sheet-shaped expandable composition for forming the core layer by coextrusion.

The configuration as above facilitates manufacture of the material substrate having the skin layer, and easily yields the material substrate with high adhesiveness between the skin layer and the core layer. In addition, the manufacturing processes can be simplified because foaming in the surface foaming layer can be performed in the process (3).

Note that the surface non- foaming layer or the surface foaming layer may be formed by pasting to the foam for forming the core layer that is produced in advance.

### [Heating layer]

The heating layer 20 to be disposed on one surface 15A of the material substrate 15 is not particularly limited as long as it is an electrically conductive layer that can generate heat by sending current, but preferably a metal layer formed of metal. Examples of the metal include metals or alloys of silver, copper, gold, nickel, aluminum, iron, etc. Among these, a metal having high extensibility is favorably used. The heating layer 20 having high extensibility and a thickness equal to or less than a certain value as described later easily follows deformation of the planar heating element 10. Thus, even when the planar heating element 10 is shaped and formed into a predetermined shape by vacuum forming, etc., the heating layer 20 hardly causes disconnection, and easily generates heat at low resistance and low voltage.

Specific examples of the metal having high extensibility include silver, copper, and gold, and silver is preferable among these from the viewpoints of cost, extensibility, durability, etc.

The heating layer 20 has a thickness T of preferably 500 µm or less, more preferably 200 µm or less, further preferably 100 µm or less, and furthermore preferably 50 µm or less. When the thickness T of the heating layer 20 is equal to or less than the above upper limit value, a part of the heating layer 20 has a state of embedding inside the foam 11 during use to hardly cause sense of touch with unevenness of the heating electrodes. Thus, the unevenness caused by the heating layer 20 are hardly exposed to the surface on the side of the planar heating element 10 on which the heating layer 20 is to be provided during use or assembling, which provides good sense of touch. When the thickness of the heating layer is equal to or less than the upper limit value, the heating layer becomes significantly thinner than the material substrate 11 and the cover 31, and the impact caused by the presence or absence of the heating layer on the entire thickness is reduced. Thus, the sense of touch with unevenness due to the heating electrodes can be reduced.

The thickness T of the heating layer 20 is not particularly limited, but preferably equal to or more than a certain value from the viewpoint of keeping strength as the heating layer to, for example, achieve the electric conductivity even after shaping and forming. Specifically, the thickness T is preferably 0.05 µm or more, more preferably 0.1 µm or more, further preferably 5 µm or more, and furthermore preferably 20 µm or more.

The heating layer 20 preferably has formed wiring. The plan shape of the heating layer 20 is not particularly limited, but linear wiring extends from one terminal 20E toward the other terminal 20E while meandering so as to approximately equivalently heat an area in a certain region as illustrated in Fig. 3, for example. In this case, the heating layer 20 has a shape in which a plurality of straight line parts 20A are disposed in parallel, in which one ends or the other ends of the adjacent straight line parts 20A, 20A are alternately connected via a connecting part 20B along the parallel direction, and in which the other ends of the straight line parts 20A, 20A on both the sides become each of the terminals 20E, 20E, for example. The terminals 20E, 20E are preferably wider than parts other than the terminal 20E. The heating layer 20 preferably generates heat by applying voltage between the terminals 20E, 20E.

In another aspect, the heating layer 20 also preferably has a planar shape other than the aforementioned linear shape, such as a rectangle and a square. In this case, the entirety can be heated more uniformly. In this case, electrodes for sending current are desirably disposed on both ends of the heating layer having the planar shape. This heating layer and the electrodes need to uniformize resistance values between the electrodes and in the plain so as to uniformize the heating layer. This can heat the heating layer uniformly when voltage is applied.

In the case of the rectangle or the square, the resistance values between the electrodes can be uniformized by inhibiting a variation of the resistance values of the heating layer in the plain. Meanwhile, in cases of an irregular shape such as a trapezoid, an ellipse, a circle, etc., electric power to flow in the heating layer needs to be uniformized by providing slits on the heating layer, by inserting an auxiliary electrode between the electrodes, etc.

The resistance value of the electrode is desirably lower than the resistance value of the heating layer. This relationship can inhibit generation of heat by the electrode more than that generated by the heating layer. When the heating layer 20 has the planar shape such as the rectangle, the square, and the aforementioned other irregular shapes, there is no step between the heating layers on the surface 15A, and thus, unevenness of the heating electrodes can be eliminated.

The heating layer 20 preferably has the width W larger than the thickness T, for example, a rectangular cross section as illustrated in Figs. 1 and 2. The heating layer 20 having the rectangular cross section easily allows a part of the heating layer 20 to have the state of embedding inside the foam 11 during use or assembling. The width W may be any as long as it is sufficiently larger than the thickness T, and is 1 to 1000 mm, preferably 2 to 700 mm, and more preferably 3 to 200 mm, for example. The heating layer 20 favorably has the width W at a part other than the terminal 20E.

The heating layer 20 is preferably formed from a metal nano-ink, specifically a metal nano-ink paste. The metal nano-ink is an ink in which a metal nanomaterial such as metal nanoparticles, metal nanowires, and metal nanorods is dispersed in a dispersion medium such as water and an organic solvent. The metal nano-ink may further contain a binder component being a resin component, a dispersant, etc. as necessary. The resin component is not particularly limited, but a thermosetting resin, etc. are favorably used. The type of the metal used for the metal nano-ink is as noted above, and preferably a silver nanomaterial containing silver as a main component, such as silver nanoparticles and silver nanowires. Therefore, the metal nano-ink is preferably a silver nano-ink, and more preferably a silver nano-ink paste.

The heating layer 20 formed from the metal nano-ink easily generates heat at low resistance and low voltage. Although the foam 11 to constitute the material substrate 15 does not typically exhibit high insulation resistance, the heating layer 20 that can generate heat at low voltage can prevent electric leakage from the material substrate 15 side.

The metal nanoparticles are particles having a nanoscale particle diameter. An average particle diameter of the metal nanoparticles is favorably 1 nm or more and less than 1000 nm, preferably 1 to 300 nm, and more preferably 5 to 100 nm. Note that **"**average particle diameter**"** is a volume-averaged particle diameter (a median diameter, D50), and can be measured with a laser-type particle size distribution meter, for example.

As the metal nano-ink, commercially available products can also be used. For example, a trade name **"**DOTITE**"** (manufactured by FUJIKURA KASEI CO., LTD.), a trade name **"**Conductive paste for forming processing**"** (manufactured by TOYOBO MC Corporation), a trade name **"**Low-temperature curable conductive paste**"** (manufactured by Taiyo Ink Mfg. Co., Ltd.), etc. can be used.

The heating layer 20 is favorably formed by applying the metal nano-ink on the material substrate 15 by a known printing method, etc. such as screen printing and inkjet printing, then drying the coating, and heating the coating as necessary. The metal nanoparticles favorably form the metal layer on the material substrate 15 by, for example, pseudo sintering, heating aggregation, etc. A heating temperature after applying the metal nano-ink is, for example, 80 to 150°C, and preferably 100 to 140°C. Setting the heating temperature to be equal to or higher than the above lower limit value easily allows the pseudo sintering or the heating aggregation, which yields the heating layer that can generate heat at low resistance and low voltage. Setting the heating temperature to be equal to or lower than the above upper limit value can prevent the material substrate containing the foam from thermal deterioration.

Note that the heating layer 20 may be formed from a material other than the metal nano-ink. For example, the heating layer 20 may be formed from an electrically conductive material other than metal, or may be formed from an electrically conductive polymer such as a polythiophene-type electrically conductive polymer (PEDOT/PSS). Using the electrically conductive polymer can yield the heating layer having higher flexibility, and can yield good sense of touch. Using the electrically conductive polymer can yield a transparent heating layer, and a light-transparent heater can be obtained by using a light-transparent foam for the material substrate.

The heating layer 20 may also be formed by forming the metal film by physical deposition such as vacuum vapor deposition and sputtering, or may be formed by forming the metal film by plating. The heating layer 20 may also be formed by pasting a metal foil such as a gold foil. The heating layer 20 may also be formed from a carbon material such as graphite, carbon nanotube, and graphene or a carbon material such as carbon-fiber textile. In particular, using a carbon nanomaterial such as carbon nanotube and carbon nanoparticles can yield a light-transparent heating layer having higher flexibility. Further, the heating layer 20 may also be formed from an electrically conductive ink in which electrically conductive particles of carbon or metal are dispersed in a resin. These materials for the heating layer may be used as one type, or multiple heating layers composed of a mixture of a plurality of the materials or composed of a plurality of the materials may be laminated.

The heating layer 20 is favorably disposed so as to directly contact the surface of the foam 11, as illustrated in Fig. 1. The heating layer 20 directly laminated to the surface of the foam 11 is easily embedded inside the foam 11. In addition, the planar heating element 10 becomes to have the simple configuration, and thus, the planar heating element 10 can be manufactured with higher production efficiency.

Note that the heating layer 20 is not necessarily laminated directly to the surface of the foam 11, and may be formed so as to contact a surface of a member other than the foam 11. For example, when the aforementioned ground layer 16 is formed on the surface 15A of the material substrate 15, the heating layer 20 is favorably formed so as to contact the ground layer 16. When the surface non- foaming layer is provided as the skin layer, the heating layer 20 may be formed so as to contact the surface non- foaming layer.

A line width size of the heating layer is not particularly limited, and the foaming layer may have a size so as to cover the entire of the surface or the substantial entire of the surface of the foam 11, for example.

The resistance value of the heating layer is not particularly limited, but preferably less than 1 KΩ/sq, further preferably less than 500 Ω/sq, and particularly preferably less than 100 Ω/sq. When the resistance value is within the above range, a heater with the same size can be heated at lower voltage.

### <Laminate>

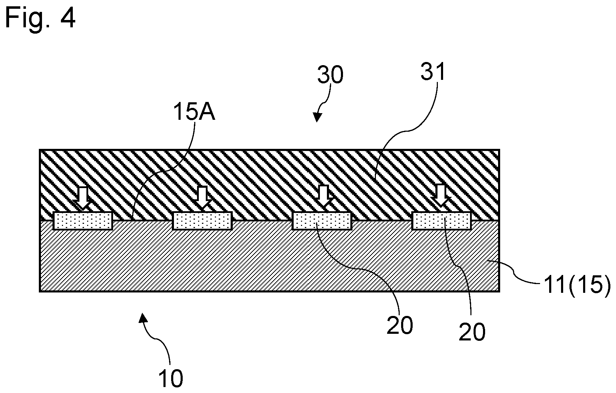

The planar heating element 10 may constitute a laminate by laminating another member. Fig. 4 illustrates one embodiment of the laminate. As illustrated in Fig. 4, a laminate 30 preferably has the aforementioned planar heating element 10 and a cover 31 adhered to the planar heating element 10. The cover 31 is adhered to a surface of the planar heating element 10 on the side on which the heating layer 20 is provided. Thus, the cover 31 can decorate the surface of the planar heating element 10 on the side on which the heating layer 20 is to be provided, and the laminate 30 having the cover 31 can be suitably used as a vehicle interior material.

Examples of the cover 30 include a resin sheet such as a polyvinyl chloride sheet and a sheet composed of a mixed resin of polyvinyl chloride and ABS resin, a thermoplastic elastomer sheet, textile, knit, and nonwoven fabric using natural fiber or artificial fiber, fake leather such as artificial leather or synthetic leather, and metal. The used cover 30 may have a design such as a leather-grain pattern and a wood-grain pattern on the surface formed by using a silicone stamper, etc. having unevenness transferred from genuine leather, a stone, a tree, etc.

The cover 31 is favorably adhered directly to the surface of the planar heating element 10 on the side on which the heating layer 20 is provided. As illustrated in Fig. 4, a part of the cover 31 is favorably adhered to the material substrate 15, and a part thereof is favorably adhered to the heating layer 20 to be laminated to the planar heating element 10.

Note that the cover 31 is not necessarily adhered directly to the planar heating element 10, and may be adhered to the surface of the planar heating element 10 on the side on which the heating layer 20 is provided via another layer (not illustrated) such as an adhesive layer. In this case, for example, a part of the cover 31 is favorably adhered to the material substrate 15 via another layer such as an adhesive layer, and a part thereof is favorably adhered to the heating layer 20 via the other layer such as the adhesive layer to be laminated to the planar heating element 10.

Further, the cover 31 may not be adhered to the heating layer 20.

As illustrated in Figs. 1 and 4, when the foam 11 constitutes the surface 15A of the material substrate 15, the cover 31 is adhered directly to the foam 11 or adhered to the foam 11 via another layer such as an adhesive layer. Note that, when the skin layer constituted with the ground layer 16 (see Fig. 2), or the surface non- foaming layer (not illustrated), etc. is provided on the surface 15A of the material substrate 15, the cover 31 may be adhered directly to the ground layer 16 or the skin layer such as the surface non- foaming layer, or alternatively, may be adhered to the ground layer 16 or the skin layer such as the surface non-foaming layer via another layer such as an adhesive layer.

Examples of a method for adhering the cover 30 to the planar heating element 10 include an extrusion laminating method, an adhesion laminating method of applying an adhesive and then pasting, a thermal laminating method (a heat fusion method), a hot melt method, a high-frequency welder method, and an electroless plating method, an electroplating method, and a vapor deposition method for metal, etc., but the cover 30 may be adhered by any method.

In the laminate 30, at least a part of the heating layer 20 is favorably embedded below the surface of the foam 11. In this case, the cover 30 is favorably adhered to the planar heating element 10 so as to press the heating layer 20 as illustrated in Fig. 4. The configuration as above allows the laminate 30 to enable more appropriately prevention of the surface on the side on which the cover 30 is provided to have the sense of touch with unevenness.

Note that the heating layer 20 is not necessarily embedded in the foam 11 by pressing by the cover 30, and may be pressed by another member or may have the state of embedding in the foam 11 without pressing. For example, the heating layer 20 may have the state of embedding in the foam 11 in a state of the planar heating element 10 on which the cover 30 is not provided.

### <Application>

The planar heating element of the present invention is preferably used for a vehicle interior material, and specifically, more preferably used for the vehicle interior material as the laminate 30 provided with the cover 31. The planar heating element is suitably used as the vehicle interior material particularly in the automobile field, and preferably constitutes a ceiling material, a door, an instrument panel, etc.

The planar heating element and the laminate of the present invention are used as a heating device in which the surface of the planar heating element on the side on which the heating layer is provided generates heat by sending current through the heating layer as noted above. Therefore, the planar heating element and the laminate applied for the vehicle interior material can heat the vehicle interior material.

The planar heating element 10 is favorably disposed so that the heating layer 20 (namely, the cover 31 in the laminate 30) is disposed on the interior side, and the material substrate 15 is disposed on the side opposite to the interior side. Note that the interior side is a side decorated with the vehicle interior material, and is an outer peripheral side of a body to be attached on which the interior material is to be attached.

The planar heating element and the laminate of the present invention are preferably shaped and formed for use so as to have a desired shape. The planar heating element and the laminate are suitably used as the interior material by shaping and forming. When the planar heating element and the laminate are shaped and formed, the heating layer 20 is also favorably shaped together with the foam 11 and the cover 31.

Examples of a method for forming the planar heating element and the laminate include a stamping method, a vacuum forming method, a compressively forming method, and an injection molding method. Among these, the stamping method and the vacuum forming method are preferable. As the vacuum forming method, any one of forming over a male mold and forming in a female mold may be adopted, but the forming over a male mold is more preferable.

### Reference Signs List

10 Planar heating element
11 Foam
15 Material substrate
15A Surface
16 Ground layer
20 Heating layer
30 Laminate
31 Cover

## Claims

1. A planar heating element, comprising:
a material substrate comprising a foam; and
a heating layer disposed on one surface of the material substrate.

2. The planar heating element according to claim 1, wherein the heating layer is disposed so as to directly contact the foam.

3. The planar heating element according to claim 1, wherein a ground layer is formed on the surface of the material substrate contacting the heating layer.

4. The planar heating element according to any one of claims 1 to 3, wherein the heating layer is formed by printing.

5. The planar heating element according to any one of claims 1 to 3, wherein a skin layer is formed on at least one surface of the foam, and the heating layer is formed on the skin layer.

6. The planar heating element according to any one of claims 1 to 3, wherein the foam is an olefin-resin-type foam.

7. The planar heating element according to claim 6, wherein a resin to constitute the foam comprises a polypropylene resin.

8. The planar heating element according to any one of claims 1 to 3, wherein the foam is an electron-beam crosslinked product.

9. The planar heating element according to any one of claims 1 to 3, wherein the foam is a closed cell foam.

10. The planar heating element according to any one of claims 1 to 3, wherein the surface of the material substrate on a side on which the heating layer is to be provided has a surface roughness Ra of 5 µm or less.

11. The planar heating element according to any one of claims 1 to 3, wherein the heating layer has a thickness of 100 µm or less, and is formed from an electrically conductive material.

12. A laminate, comprising:
the planar heating element according to claim 1; and
a cover adhered to the planar heating element directly or via another layer.

13. The laminate according to claim 12, wherein the cover is adhered to a surface of the planar heating element on a side on which the heating layer is provided.

14. A vehicle interior material, comprising the planar heating element according to claim 1 or the laminate according to claim 12.

15. The vehicle interior material according to claim 14, wherein the heating layer is disposed on an interior side, and the material substrate is disposed on a side opposite to the interior side.
